# EUROPÄISCHE PATENTSCHRIFT

(11) **EP 1 383 636 B1**
(45) Veröffentlichungstag und Bekanntmachung des Hinweises auf die Patenterteilung: **13.12.2006**
(21) Anmeldenummer: 02729774.6
(22) Anmeldetag: 12.03.2002
(51) Int. Cl.: B29C 49/78, B29C 49/64

(54) **VERFAHREN UND VORRICHTUNG ZUR TEMPERIERUNG VON VORFORMLINGEN**
METHOD AND DEVICE FOR REGULATING THE TEMPERATURE OF PARISONS
PROCEDE ET DISPOSITIF POUR TEMPERER DES EBAUCHES

(30) Priorität: 30.04.2001 DE 10121160
(43) Veröffentlichungstag der Anmeldung: 28.01.2004
(73) Patentinhaber: SIG Corpoplast GmbH & Co. KG, 22145 Hamburg (DE)
(72) Erfinder: GERNHUBER, Matthias, 22527 Hamburg (DE); REIMER, Dirk, 22391 Hamburg (DE); VOGEL, Klaus, 22885 Barsbüttel (DE)
(74) Vertreter: Klickow, Hans-Henning
(86) Internationale Anmeldenummer: PCT/DE2002/000875
(87) Internationale Veröffentlichungsnummer: WO 2002/087850

(56) Entgegenhaltungen:
- US-A- 3 865 912
- US-A- 4 079 104
- US-A- 4 606 723
- US-A- 5 322 651
- PATENT ABSTRACTS OF JAPAN vol. 009, no. 162 (M-394), 6. Juli 1985 (1985-07-06) & JP 60 034827 A (YOSHINO KOGYOSHO:KK), 22. Februar 1985 (1985-02-22)

## Beschreibung

Die Erfindung betrifft ein Verfahren zur Temperierung von Vorformlingen aus einem thermoplastischen Material, die im Anschluß an ihre Temperierung innerhalb einer Blasform durch Einwirkung eines unter Druck stehenden Mediums in einen Behälter umgeformt werden, bei dem die Vorformlinge sowohl durch Beaufschlagung mit einer Heizstrahlung erwärmt als auch durch Anblasen mit Kühlluft zumindest im Oberflächenbereich gekühlt werden.

Die Erfindung betrifft darüber hinaus eine Vorrichtung zur Temperierung von Vorformlingen aus einem thermoplastischen Material, die mit mindestens einem Heizelement und mit mindestens einem Kühlluftgebläse versehen ist sowie die im Bereich eines Transportweges der Vorformlinge angeordnet ist, der eine Vorformlingseingabe mit einer Blasstation verbindet.

Bei einer Behälterformung durch Blasdruckeinwirkung werden zuvor temperierte Vorformlinge aus einem thermoplastischen Material, beispielsweise vorformlinge aus PET (Polyethylenterephthalat), innerhalb einer Blasmaschine unterschiedlichen Bearbeitungsstationen zugeführt. Typischerweise weist eine derartige Blasmaschine eine Heizeinrichtung sowie eine Blaseinrichtung auf, in deren Bereich der zuvor temperierte Vorformling durch biaxiale Orientierung zu einem Behälter expandiert wird. Die Expansion erfolgt mit Hilfe von Druckluft, die in den zu expandierenden Vorformling gesteuert eingeleitet wird. Der verfahrenstechnische Ablauf bei einer derartigen Expansion des Vorformlings wird in der DE-OS 43 40 291 erläutert.

Der grundsätzliche Aufbau einer Blasstation zur Behälterfortnung wird in der DE-OS 42 12 583 beschrieben. Möglichkeiten zur Temperierung der Vorformlinge werden in der DE-OS 23 52 926 erläutert.

Innerhalb der Vorrichtung zur Blasformung können die vorformlinge sowie die geblasenen Behälter mit Hilfe unterschiedlicher Handhabungseinrichtungen transportiert werden. Bewährt hat sich insbesondere die Verwendung von Transportdornen, auf die die Vorformlinge aufgesteckt werden. Die Vorformlinge können aber auch mit anderen Trageinrichtungen gehandhabt werden. Die Verwendung von Greifzangen zur Handhabung von Vorformlingen und die Verwendung von Spreizdornen, die zur Halterung in einen Mündungsbereich des Vorformlings einführbar sind, gehören ebenfalls zu den verfügbaren Konstruktionen.

Die bereits erläuterte Handhabung der Vorformlinge erfolgt zum einen bei den sogenannten Zweistufenverfahren, bei denen die Vorformlinge zunächst in einem Spritzgußverfahren hergestellt, anschließend zwischengelagert und erst später hinsichtlich ihrer Temperatur konditioniert und zu einem Behälter aufgeblasen werden. Zum anderen erfolgt eine Anwendung bei den sogenannten Einstufenverfahren, bei denen die Vorformlinge unmittelbar nach ihrer spritzgußtechnischen Herstellung und einer ausreichenden Verfestigung geeignet temperiert und anschließend aufgeblasen werden.

Im Hinblick auf die verwendeten Blasstationen sind unterschiedliche Ausführungsformen bekannt. Bei Blasstationen, die auf rotierenden Transporträdern angeordnet sind, ist eine buchartige Aufklappbarkeit der Formträger häufig anzutreffen. Es ist aber auch möglich, relativ zueinander verschiebliche oder andersartig geführte Formträger einzusetzen. Bei ortsfesten Blasstationen, die insbesondere dafür geeignet sind, mehrere Kavitäten zur Behälterformung aufzunehmen, werden typischerweise parallel zueinander angeordnete Platten als Formträger verwendet.

Die Durchführung einer Beheizung der Vorformlinge bei einem Zweistufenverfahren sowie die entsprechende Temperaturprofilierung bei der Durchführung des Einstufenverfahrens erfolgt in der Regel unter Verwendung von Infrarot-Strahlern. Mit derartigen Infrarot-Strahlern lassen sich in kurzer Zeit relativ hohe Energiemengen in die Vorformlinge einbringen.

Bekannt ist es ebenfalls bereits, mit Hochfrequenz eine Beheizung der Vorformlinge durchzuführen, da bei einer derartigen Beheizung ein höherer Wirkungsgrad erreicht werden kann. Eine Vorrichtung zur Durchführung einer Hochfrequenzbeheizung wird beispielsweise in der EP-OS 0 849 067 beschrieben.

Ein typisches Problem bei der Verwendung von Heizstrahlung, insbesondere bei einer Verwendung von Infrarot-Strahlung, besteht darin, daß ein erheblicher Anteil der Strahlung bereits kurz unterhalb der Oberfläche der Vorformlinge in Wärmeenergie umgesetzt wird, die sich dann durch Wärmeleitung weiter ausbreitet. Aufgrund der relativ schlechten Wärmeleitfähigkeit der eingesetzten Kunststoffe erfordert ein derartiger wärmeleitungsvorgang einen Zeitraum, der bei einem Einsatz hoher Strahlungsleistungen dazu führen kann, daß eine zu starke Erhitzung des Oberflächenbereiches der Vorformlinge verursacht wird. Typischerweise werden deshalb gleichzeitig mit der Beaufschlagung der Vorformlinge durch die Strahlungsheizung Kühlluftgebläse eingesetzt, die eine Oberflächenkühlung der Vorformlinge hervorrufen. Der Begriff Kühlluftgebläse umfaßt hierbei nicht nur eine Verwendung üblicher Umgebungsluft, sondern es können gegebenenfalls auch andere geeignete gasförmige Kühlmedien in Richtung auf den Vorformling geleitet werden. Die Verwendung der Umgebungsluft als Kühlluft hat jedoch erhebliche Kostenvorteile.

Gemäß einem üblichen Verfahrensablauf wird der Vorformling in Richtung seiner Längsachse mit einem Temperaturprofil versehen, ebenfalls wird bei speziellen Konturen der zu blasenden Behälter auch in Umfangsrichtung des Vorformlings ein Temperaturprofil generiert. Darüber hinaus stellt sich auch durch die Wandung des Vorformlings hindurch ausgehend von der äußeren Oberfläche in Richtung auf die innere Oberfläche ein Temperaturprofil ein, das von der eingebrachten Strahlungsenergie, der einwirkenden Kühlluftmenge, der sich einstellenden Strömungsverhältnisse und zusätzlich von diversen Umgebungsparametern abhängig ist.

Die Vielzahl der Einflußfaktoren, die das sich einstellende Temperaturprofil zwischen der äußeren Oberfläche und der inneren Oberfläche des Vorformlings verändern, führt dazu, daß noch nicht alle Anforderungen an eine möglichst gleichbleibende Produktionsqualität erfüllt werden können. Das besondere Problem liegt hierbei darin, daß die sich einstellenden Temperaturprofile einen erheblichen Einfluß auf die Materialverteilung beim geblasenen Behälter sowie auf die jeweiligen Orientierungsverhältnisse innerhalb des Materials des geblasenen Behälters haben.

Ein weiter Einflußfaktor besteht darin, daß bei einem Einsatz der Blasmaschine in einen sogenannten Inline-Betrieb bei direkter Kopplung mit einer nachfolgenden Füllmaschine häufig ein Hoch- und Herunterfahren der Produktionsleistung der Blasmaschine erforderlich ist, was aufgrund der auftretenden thermischen Zeitkonstanten, beispielsweise der Erwärmung der Maschine sowie der Heizungskomponenten selbst, zu weiteren Ungleichmäßigkeiten bei den hergestellten Produkten führt.

Aus der US-A-4,079,104 ist es bereits bekannt, Vorformlinge vor ihrer Blasverformung durch gleichzeitige Beheizung und Kühlung geeignet zu temperieren. Die Vorformlinge werden hierzu mit Kühlluft angeblasen, die durch mit Heizstrahlern versehene Heizeinrichtungen hindurch in Richtung auf die Vorformlinge geleitet wird.

In der JP(A) 60034827 wird die Verwendung einer Meßeinrichtung zur Erfassung einer Oberflächentemperatur der Vorformlinge sowie die Verwendung der entsprechenden Meßwerte zur Regelung einer Heizung beschrieben. Insbesondere wird die Verwendung einer Temperaturerfassung der unbeheizten Vorformlinge zusätzlich zu einer Temperaturerfassung der beheizten vorformlinge beschrieben, um schnell auf geänderte Umgebungstemperaturen reagieren zu können.

Aus der US-A-3,865,912 ist die Messung einer Oberflächentemperatur der beheizten Vorformlinge in Kombination mit einer Messung der Wärmeabgabe der verwendeten Heizeinrichtungen sowie die Verwendung der Meßwerte zur Regelung der Heizeinrichtungen bekannt.

In der US-A-5,322,651 wird eine geregelte Zufuhr von Kühlluft beschrieben. Durch eine Mischung von Umgebungsluft sowie aus der Heizung austretender erhitzter Luft wird eine gleichmäßige Zufuhrtemperatur der Kühlluft in die Heizeinrichtung erreicht.

Aufgabe der vorliegenden Erfindung ist es, ein Verfahren der einleitend genannten Art derart zu verbessern, daß eine gleichmäßige Temperierung einer großen Anzahl von Vorformlingen relativ zueinander unterstützt wird.

Diese Aufgabe wird erfindungsgemäß dadurch gelöst, daß von einer Regelung eine Kompensation einer Veränderung der Oberflächentemperatur der Vorformlinge aufgrund von einwirkenden Umgebungsparametern durch eine Veränderung der Intensität der Beaufschlagung der vorformlinge mit Kühlluft durchgeführt wird, daß bei gleichzeitig einwirkender Heizung und Kühlung von der Regelung eine im wesentlichen gleichbleibende Oberflächentemperatur der Vorformlinge durch die Veränderung der Kühlung erreicht wird und daß die Oberflächentemperatur mindestens einiger der Vorformlinge gemessen und von der Regelung mit einem Sollwert verglichen wird.

Weitere Aufgabe der vorliegenden Erfindung ist es, eine Vorrichtung der einleitend genannten Art derart zu konstruieren, daß eine gleichmäßige Produktionsqualität unterstützt wird.

Diese Aufgabe wird erfindungsgemäß dadurch gelöst, daß das Kühlluftgebläse an eine Regelung angeschlossen ist, die ein Meßsignal mindestens eines Temperatursensors auswertet, der eine Temperatur der Vorformlinge erfaßt, und daß die Regelung für die Vorgabe eines Sollwertes für eine Förderleistung des Kühlgebläses eine Charakteristik zur näherungsweisen Konstanthaltung einer Oberflächentemperatur des Vorformlings in Abhängigkeit von einem vorgegebenen Sollwert aufweist.

Durch die Regelung des Kühlluftgebläses in Abhängigkeit von der erfaßten Oberflächentemperatur der Vorformlinge ist es möglich, die Heizstrahler permanent in einem optimalen Frequenzbereich zu betreiben und hierdurch sowohl im Hinblick auf eine Energieausnutzung als auch im Hinblick auf eine möglichst schnelle und effektive Aufheizung der Vorformlinge ein Optimum zu erreichen.

Gemäß einer bevorzugten Ausführungsform ist daran gedacht, zusätzlich zur Regelung des Kühlluftgebläses auch eine Regelung des Heizelementes durchzuführen. Für das Heizelement wird hierbei ein Regelungsbereich derart in einer Umgebung eines Strahlungsoptimums gewählt, daß auch bei der Durchführung von Regelungsvorgängen des Heizelementes ein Betrieb mit nahezu optimaler Strahlungsemission gewährleistet ist. Bei einer Regelung sowohl der Förderleistung beziehungsweise der Fördertemperatur der Kühlluft als auch einer Regelung der Heizleistung kann die Durchführung der Regelung nach einem gemeinsamen Regelungs- beziehungsweise Steuerungskonzept oder nach jeweils speziell optimierten Regelungskonzepten durchgeführt werden.

Die voneinander unabhängige Veränderung der Intensität der Heizstrahlung und der Intensität der Beaufschlagung der Vorformlinge mit Kühlluft ermöglicht es, ein vorgegebenes Temperaturprofil zwischen der Innenwand des Vorformlings und der Außenwand des Vorformlings relativ genau und reproduzierbar zu realisieren. Insbesondere ist es durch die Veränderungsmöglichkeiten sowohl für die Strahlungsintensität als auch für die Kühlintensität möglich, eine Vielzahl von einwirkenden Umgebungsparametern zu kompensieren und Anlaufvorgänge der Produktionsmaschine aufgrund der bekannten thermischen Zeitkonstanten derart zu gestalten, daß sehr schnell auch nach einem Maschinenanlauf eine gute und gleichbleibende Produktqualität erreicht werden kann.

Insbesondere ist daran gedacht, über die Steuerung der Intensität der Heizstrahlung das Temperaturprofil für einen festzulegenden Nennbetrieb zu definieren und einwirkende Umgebungsparameter durch die Regelung der Kühlluftgebläse zu kompensieren. Eine derartige Betriebsweise hat insbesondere bei der Verwendung von Infrarot-Strahlern den Vorteil, daß diese mit einer möglichst hohen Betriebstemperatur einen hohen Infrarot-Anteil an der abgegebenen Strahlung realisieren. Bei einem Absenken der Temperatur der Heizstrahler würde durch eine Verschiebung des Spektralbandes nur eine geringe Eindringtiefe der Strahlungsenergie in das Material der Vorformlinge erreicht werden können, wodurch eine Ausbreitung der Wärmeenergie in die inneren Bereiche des Vorformlings hinein erschwert beziehungsweise verlängert würde.

Zur Bereitstellung eines ruhigen Regelungsverhaltens wird vorgeschlagen, daß eine Veränderung der Kühlleistung bei Überschreiten einer vorgebbaren Abweichung der Oberflächentemperatur von einem Sollwert durchgeführt wird.

Zur Realisierung eines geschlossenen Regelkreises ist insbesondere daran gedacht, daß die Oberflächentemperatur mindestens einiger der vorformlinge gemessen wird.

Eine Temperaturmessung kann dadurch durchgeführt werden, daß die Oberflächentemperatur der Vorformlinge von einem Pyrometer gemessen wird.

Eine exakte Einhaltung eines vorgegebenen Temperaturprofils durch die Wandung des Vorformlings hindurch kann dadurch erreicht werden, daß die Innentemperatur mindestens einiger der Vorformlinge gemessen wird.

Eine Temperaturmessung kann auch hier dadurch erfolgen, daß die Innentemperatur mindestens einiger der Vorformlinge von einem Pyrometer gemessen wird.

Eine gerätetechnisch einfache Realisierung der Messung der Innentemperatur kann dadurch erfolgen, daß das Pyrometer zur Durchführung der Messung mindestens bereichsweise in einen Innenraum des Vorformlings eingefahren wird.

Zur effektiven Temperierung einer großen Anzahl von Vorformlingen je Zeiteinheit wird vorgeschlagen, daß die vorformlinge an räumlich ortsfesten Heizelementen vorbeitransportiert werden.

Eine konstruktiv einfache Erzeugung der Bewegung des Pyrometers für die Messung der Innentemperatur kann dadurch erfolgen, daß das Einfahren und Ausfahren eines Pyrometers in den Innenraum des Vorformlings mechanisch von der Transportbewegung der Vorformlinge abgeleitet wird.

Zur Gewährleistung einer möglichst optimalen Ausnutzung der Kapazität der eingesetzten Heizelemente wird vorgeschlagen, daß eine Innentemperatur der Vorformlinge über die Heizelemente und eine Außentemperatur der Vorformlinge über die Gebläse geregelt wird.

Ein verbessertes Regelungsverhalten kann dadurch realisiert werden, daß eine Temperaturträgheit des Materials der Vorformlinge durch ein in die Regelung implementiertes mathematisches Model der Regelungsstrecke kompensiert wird.

Zur Gewährleistung einer Vermeidung von anhaltenden Regelabweichungen wird vorgeschlagen, daß mindestens einer der verwendeten Regler mit einem Integral-Anteil versehen wird.

Eine effektive Durchführung der Beheizung der Vorformlinge wird dadurch unterstütz, daß die Vorformlinge von Infrarot-Strahlung beheizt werden.

Zur Unterstützung einer Herstellung von Behältern mit komplizierteren Konturen wird vorgeschlagen, daß die vorformlinge mit einem Temperaturprofil in ihrer Längsrichtung versehen werden.

Ebenfalls erweist es sich bei der Herstellung von Behältern mit Querschnittformen, die von einer Kreiskontur abweichen, als vorteilhaft, daß die Vorformlinge mit einem Temperaturprofil in ihrer Umfangsrichtung versehen werden.

Geringe Abweichungen von vorgegebenen Sollwerten können dadurch erreicht werden, daß bei einer Veränderung der Heizstrahlung unter Berücksichtigung der Temperatureigenschaften der Vorformlinge gleichzeitig eine Veränderung der Kühlleistung vor einem Auftreten einer Regelungsabweichung durchgeführt wird.

Eine effektive Maßnahme zur Beeinflussung der Kühlleistung besteht darin, daß die Kühlleistung durch eine Regelung der Drehzahl der eingesetzten Kühlgebläse verändert wird.

Zur Gewährleistung einer lang andauernden Betriebsfähigkeit der Kühlluftgebläse wird vorgeschlagen, daß die Lüfterleistung auf minimale und maximale Werte begrenzt wird.

Eine weitere Verbesserung der Regelungsqualität kann dadurch erreicht werden, daß eine Kaskadenregelung realisiert wird.

In der Zeichnung sind Ausführungsbeispiele der Erfindung schematisch dargestellt. Es zeigen:
- Fig. 1:: Eine perspektivische Darstellung einer Blasstation zur Herstellung von Behältern aus Vorformlingen,
- Fig. 2:: einen Längsschnitt durch eine Blasform, in der ein Vorformling gereckt und expandiert wird,
- Fig. 3:: eine Skizze zur Veranschaulichung eines grundsätzlichen Aufbaus einer Vorrichtung zur Blasformung von Behältern,
- Fig. 4:: eine Heizeinrichtung mit einem rotierenden Heizrad sowie einer Mehrzahl von Heizelementen sowie Kühlluftgebläsen,
- Fig. 5:: eine Draufsicht auf eine Heizeinrichtung mit einer umlaufenden Transportkette sowie einer Vielzahl von Heizelementen und Kühlluftgebläsen,
- Fig. 6:: einen Querschnitt durch eine Heizeinrichtung, bei der ein Vorformling zwischen einem Heizelement und einem Reflektor angeordnet ist,
- Fig. 7:: eine Draufsicht auf eine Heizeinrichtung, bei der die Vorformlinge von kettenartigen Transportelementen an Heizelementen vorbeigeführt werden,
- Fig. 8:: ein schematisches Blockschaltbild zur Regelung der Heizelemente und der Kühlluftgebläse,
- Fig. 9:: ein Blockschaltbild einer gegenüber Figur 8 modifizierten Regelung
und
- Fig. 10:: eine gegenüber dem Blockschaltbild in Figur 8 nochmals modifizierte Regelungsvariante.

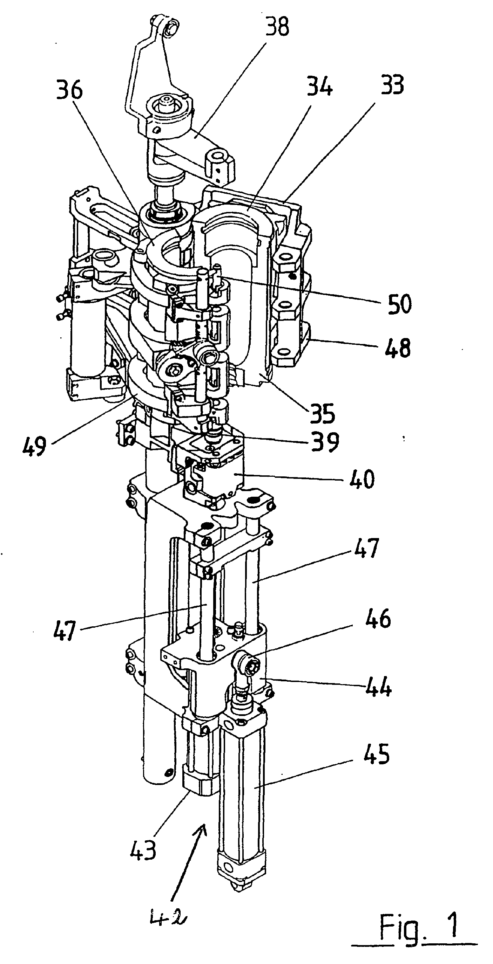

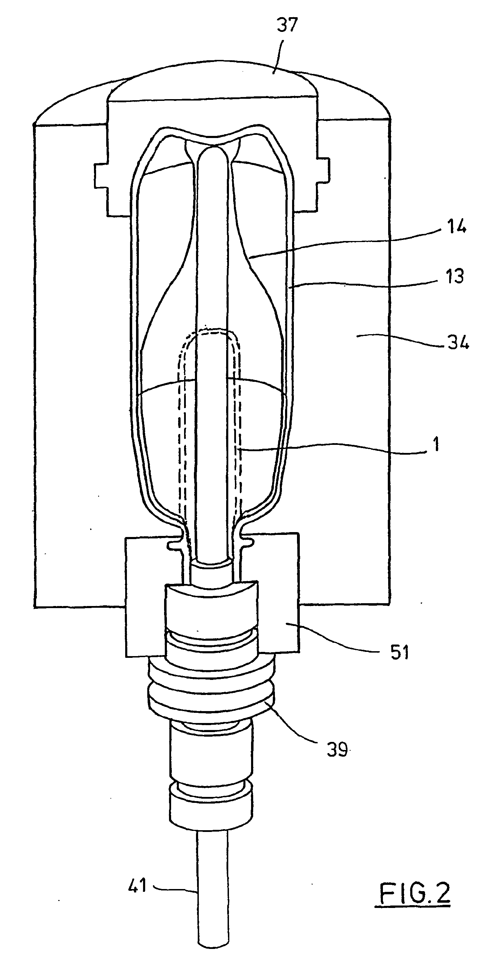

Der prinzipielle Aufbau einer Vorrichtung zur Umformung von Vorformlingen (1) in Behälter (13) ist in Fig. 1 und in Fig. 2 dargestellt.

Die Vorrichtung zur Formung des Behälters (13) besteht im wesentlichen aus einer Blasstation (33), die mit einer Blasform (34) versehen ist, in die ein Vorformling (1) einsetzbar ist. Der Vorformling (1) kann ein spritzgegossenes Teil aus Polyethylenterephthalat sein. Zur Ermöglichung eines Einsetzens des Vorformlings (1) in die Blasform (34) und zur Ermöglichung eines Herausnehmens des fertigen Behälters besteht die Blasform (34) aus Formhälften (35,36) und einem Bodenteil (37), der von einer Hubvorrichtung (38) positionierbar ist. Der Vorformling (1) kann im Bereich der Blasstation (33) von einem als Transportdorn ausgebildeten Tragelement (39) gehalten sein, das gemeinsam mit dem Vorformling (1) eine Mehrzahl von Behandlungsstationen innerhalb der Vorrichtung durchläuft. Es ist aber auch möglich, den Vorformling (1) beispielsweise über Zangen oder andere Handhabungsmittel direkt in die Blasform (34) einzusetzen.

Zur Ermöglichung einer Druckluftzuleitung ist unterhalb des Tragelementes (39) ein Anschlußkolben (40) angeordnet, der dem Vorformling (1) Druckluft zuführt und gleichzeitig eine Abdichtung relativ zum Tragelement (39) vornimmt. Bei einer abgewandelten Konstruktion ist es grundsätzlich aber auch denkbar, feste Druckluftzuleitungen zu verwenden.

Eine Reckung des Vorformlings (1) erfolgt mit Hilfe einer Reckstange (41), die von einem Zylinder (42) positioniert wird. Grundsätzlich ist es aber auch denkbar, eine mechanische Positionierung der Reckstange (41) über Kurvensegmente durchzuführen, die von Abgriffrollen beaufschlagt sind. Die Verwendung von Kurvensegmenten ist insbesondere dann zweckmäßig, wenn eine Mehrzahl von Blasstationen (33) auf einem rotierenden Blasrad angeordnet sind. Eine Verwendung von Zylindern (42) ist zweckmäßig, wenn ortsfest angeordnete Blasstationen (33) vorgesehen sind.

Bei der in Fig. 1 dargestellten Ausführungsform ist das Recksystem derart ausgebildet, daß eine Tandem-Anordnung von zwei Zylindern (42) bereitgestellt ist. Von einem Primärzylinder (43) wird die Reckstange (41) zunächst vor Beginn des eigentlichen Reckvorganges bis in den Bereich des Bodens des Vorformlings (1) gefahren. Während des eigentlichen Reckvorganges wird der Primärzylinder (43) mit ausgefahrener Reckstange gemeinsam mit einem den Primärzylinder (43) tragenden Schlitten (44) von einem Sekundärzylinder (45) oder über eine Kurvensteuerung positioniert. Insbesondere ist daran gedacht, den Sekundärzylinder (45) derart kurvengesteuert einzusetzen, daß von einer Führungsrolle (46), die während der Durchführung des Reckvorganges an einer Kurvenbahn entlang gleitet, eine jeweilige Reckposition vorgegeben wird. Die Führungsrolle (46) wird vom Sekundärzylinder (45) gegen die Führungsbahn gedrückt. Der Schlitten (44) gleitet entlang von zwei Führungselementen (47).

Nach einem Schließen der im Bereich von Trägern (48,49) angeordneten Formhälften (35,36) erfolgt eine Verriegelung der Träger (48, 49) relativ zueinander mit Hilfe einer Verriegelungseinrichtung (50).

Zur Anpassung an unterschiedliche Formen des Mündungsabschnittes ist gemäß Fig. 2 die Verwendung separater Gewindeeinsätze (51) im Bereich der Blasform (34) vorgesehen.

Fig. 2 zeigt zusätzlich zum geblasenen Behälter (13) auch gestrichelt eingezeichnet den Vorformling (1) und schematisch eine sich entwickelnde Behälterblase (14).

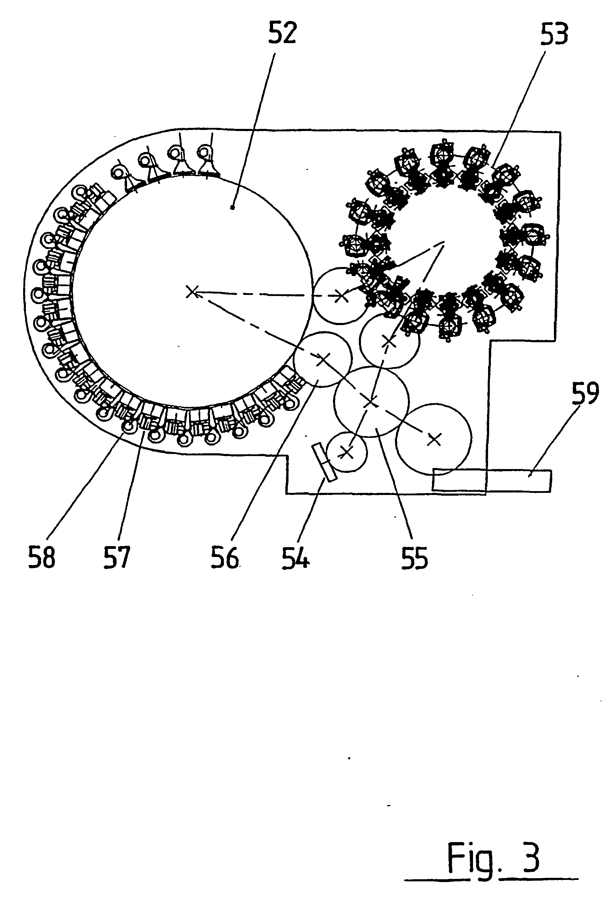

Fig. 3 zeigt den grundsätzlichen Aufbau einer Blasmaschine, die mit einem rotierenden Heizrad (52) sowie einem rotierenden Blasrad (53) versehen ist. Ausgehend von einer Vorformlingseingabe (54) werden die Vorformlinge (1) von Übergaberädern (55,56) in den Bereich des Heizrades (52) transportiert. Entlang des Heizrades (52) sind als Heizstrahler ausgebildete Heizelemente (57) sowie Gebläse (58) angeordnet, um die Vorformlinge (1) zu temperieren. Nach einer ausreichenden Temperierung der Vorformlinge (1) werden diese an das Blasrad (53) übergeben, in dessen Bereich die Blasstationen (33) angeordnet sind. Die fertig geblasenen Behälter (13) werden von weiteren Übergaberädern einer Ausgabestrecke (59) zugeführt.

Um einen Vorformling (1) derart in einen Behälter (13) umformen zu können, daß der Behälter (13) Materialeigenschaften aufweist, die eine lange Verwendungsfähigkeit von innerhalb des Behälters (13) abgefüllten Lebensmitteln, insbesondere von Getränken, gewährleisten, müssen spezielle Verfahrensschritte bei der Beheizung und Orientierung der Vorformlinge (1) eingehalten werden. Darüber hinaus können vorteilhafte Wirkungen durch Einhaltung spezieller Dimensionierungsvorschriften erzielt werden.

Als thermoplastisches Material können unterschiedliche Kunststoffe verwendet werden. Einsatzfähig sind beispielsweise PET, PEN oder PP.

Die Expansion des Vorformlings (1) während des Orientierungsvorganges erfolgt durch Druckluftzuführung. Die Druckluftzuführung ist in eine Vorblasphase, in der Gas, zum Beispiel Preßluft, mit einem niedrigen Druckniveau zugeführt wird und eine sich anschließende Hauptblasphase unterteilt, in der Gas mit einem höheren Druckniveau zugeführt wird. Während der Vorblasphase wird typischerweise Druckluft mit einem Druck im Intervall von 10 bar bis 25 bar verwendet und während der Hauptblasphase wird Druckluft mit einem Druck im Intervall von 25 bar bis 40 bar zugeführt.

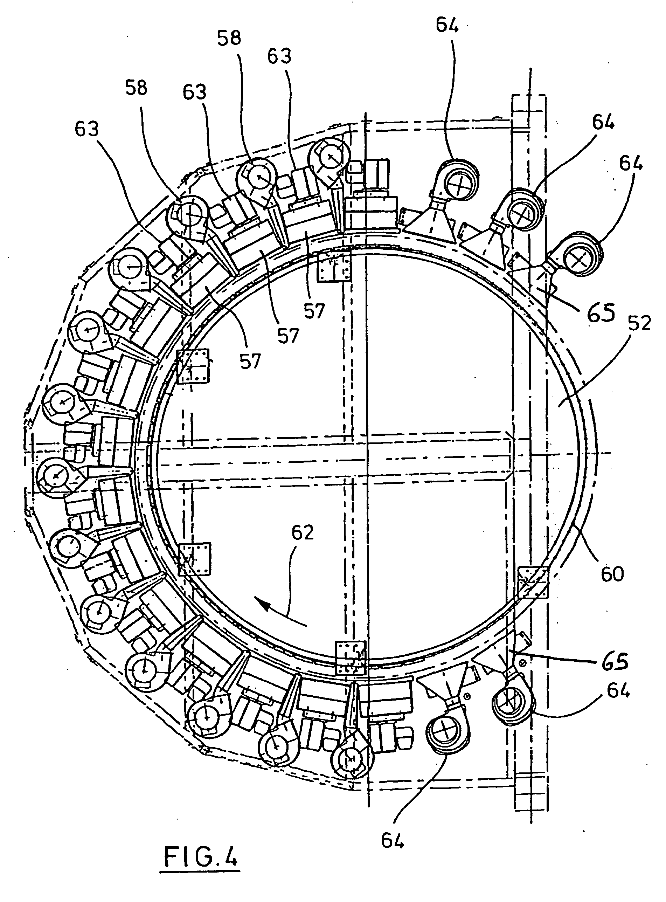

Fig. 4 zeigt eine Ausführungsform, bei der ähnlich zu Fig. 3 eine Vielzahl von Heizelementen (57) und Gebläsen (58) entlang des Umfanges des Heizrades (52) angeordnet sind. Bezüglich eines Transportweges (60) sind gegenüberliegend zu den Heizelemente (57) Reflektoren (61) angeordnet. Das Heizrad (52) dreht sich dabei in einer Umlaufrichtung (62).

Die Gebläse (58) sind jeweils zwischen zwei Heizelementen (57) angeordnet. Darüber hinaus sind auch die Heizelemente (57) selbst mit Gebläsen (63) ausgestattet, um insbesondere eine Kühlung von Strahlerröhren der Heizelemente (57) zu gewährleisten. Über Gebläse (64), die in Umlaufrichtung (62) vor bzw. hinter den Heizelementen (57) angeordnet sind, kann eine selektive Kühlung vorgegebener Bereiche der Vorformlinge (1) erfolgen. Insbesondere ist daran gedacht, die Gebläse (64) mit Ausströmelementen (65) zu versehen, die in Umlaufrichtung (62) verlaufende Ausströmschlitze besitzen. Insbesondere ist daran gedacht, die Ausströmschlitze zur Kühlung eines Gewindebereiches der Vorformlinge (1) zu positionieren.

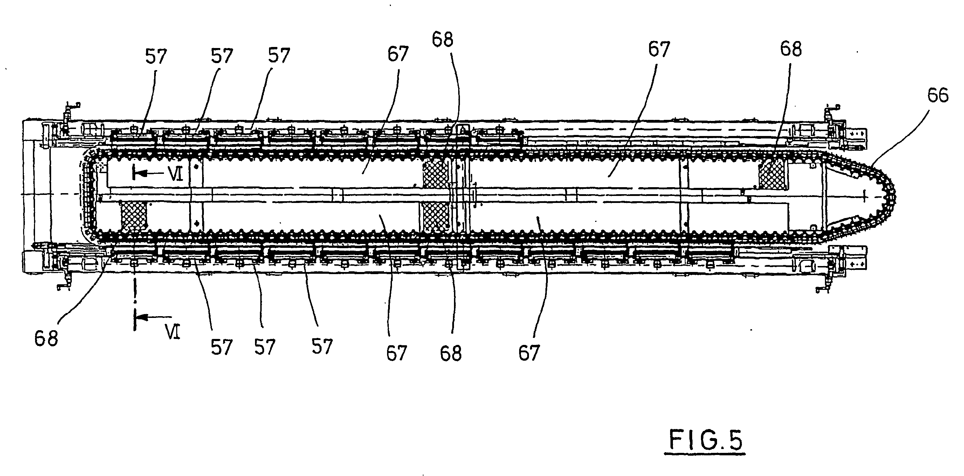

Gemäß der Ausführungsform in Fig. 5 wird statt eines rotierenden Heizrades (52) eine umlaufende Transportkette (66) verwendet. Die Verwendung einer Transportkette (66) weist den Vorteil einer größeren Freizügigkeit bei der Vorgabe des Umlaufweges auf, wodurch insbesondere bei der Verwendung einer größeren Anzahl von Heizelementen (57) der erforderliche Bauraum minimiert werden kann. Zur Kühlung der Vorformlinge (1) sowie gegebenenfalls zur Kühlung der Heizelemente (57) sind bei dieser Ausführungsform kanalartige Verteilelemente (67) verwendet, die den Heizelementen (57) gegenüberliegend angeordnet sind und in die von Gebläsen (68) Kühlluft eingeleitet wird.

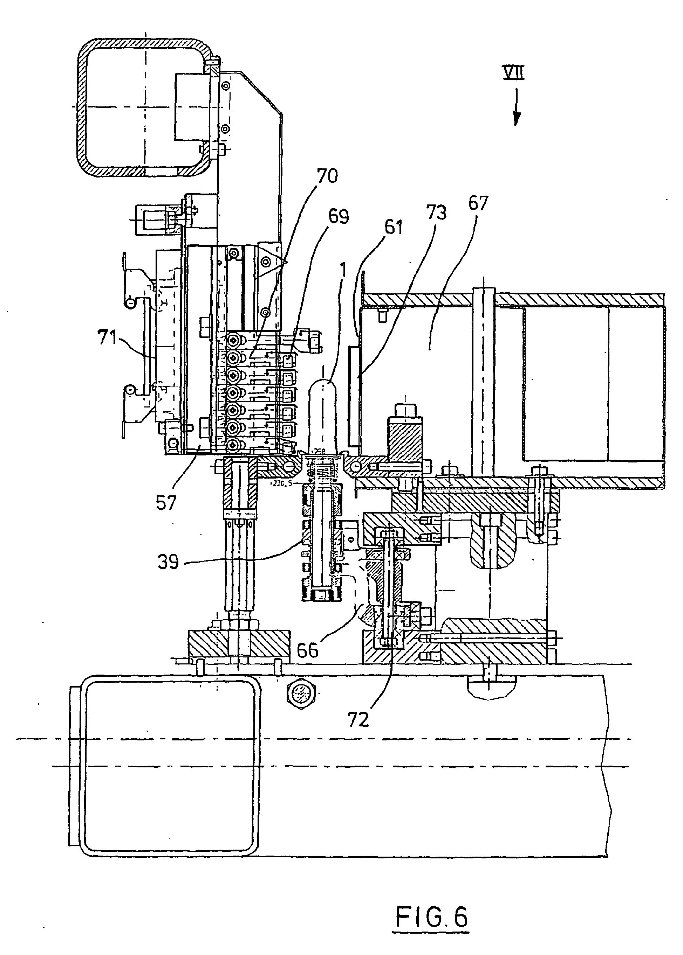

Fig. 6 zeigt in einem Vertikalschnitt die Konstruktion der Einrichtung gemäß Fig. 5 in mehr Details. Es ist insbesondere erkennbar, daß das Heizelement (57) mit Strahlerröhren (69) ausgestattet ist, die von verschieblichen Tragelementen (70) gehaltert sind. Über elektrische Anschlußelemente (71) kann das Heizelement (57) mit einer nicht dargestellten Steuerung und Energieversorgung verbunden werden.

Die Transportkette (66) haltert und transportiert die Transportdorne (39) für die Vorformlinge (1). Die Transportkette (66) besteht aus einzelnen Kettenelementen, die über Verbindungselemente (72) drehbeweglich miteinander gekoppelt sind.

Das Verteilelement (67) weist im Bereich seiner dem Heizelement (57) zugewandten Begrenzung einen Reflektor (61) und Ausströmelemente (73) auf.

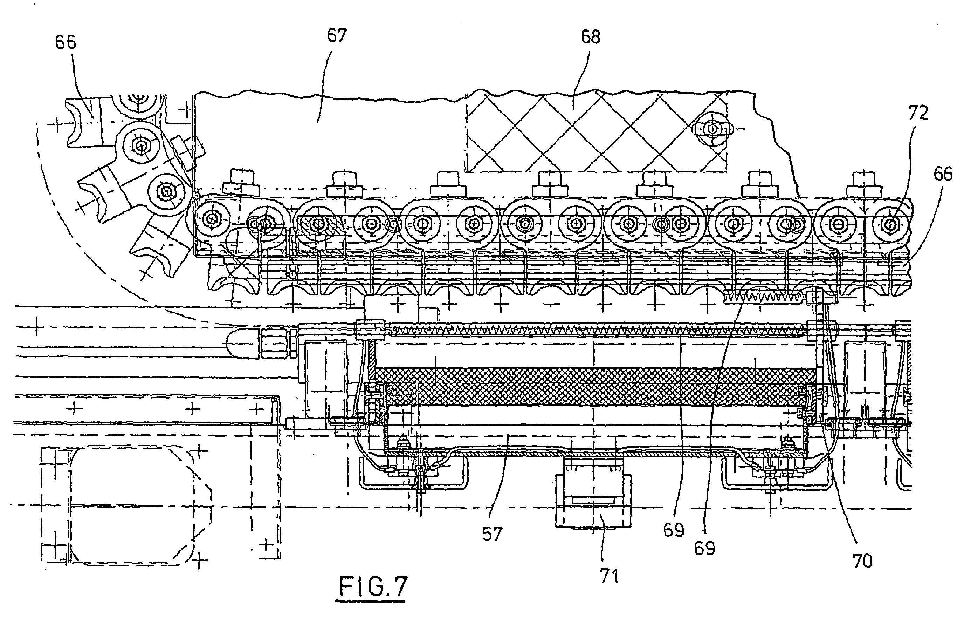

Fig. 7 zeigt eine Ansicht der Einrichtung gemäß Fig.5 und Fig. 6 entsprechend Blickrichtung VII in Fig. 6 von oben. Es ist hierbei insbesondere die gelenkige Verbindung der einzelnen Elemente der Transportkette (66) durch die Verbindungselemente (72) erkennbar, ebenfalls ist zu sehen, daß die Heizelemente (57) in Form von modulartigen Heizkästen realisiert sind. Die Darstellung in Fig. 7 zeigt dabei eine vergrößerte Darstellung in einer Umgebung der Schnittlinie VI-VI bei gleicher Blickrichtung wie in Fig. 5.

Zur Unterstützung einer gleichmäßigen Beheizung der Vorformlinge (1) in Umfangsrichtung ist vorgesehen, die Vorformlinge (1) mindestens zeitweilig während ihrer Beheizung in Rotation zu versetzen. Bei einer Herstellung von rotationssymmetrischen Behältern (13) wird die Rotation der Vorformlinge (1) mindestens während der überwiegenden Zeit der Beheizung durchgeführt. Bei einer Herstellung von Behältern (13), die eine von einer Kreiskontur abweichende Querschnittgestaltung aufweisen, kann es sich ebenfalls als vorteilhaft erweisen, die Vorformlinge (1) nur zeitweise zu drehen oder eine schrittweise Rotation vorzusehen, um ein definiertes Temperaturprofil in Umfangsrichtung zu erzeugen.

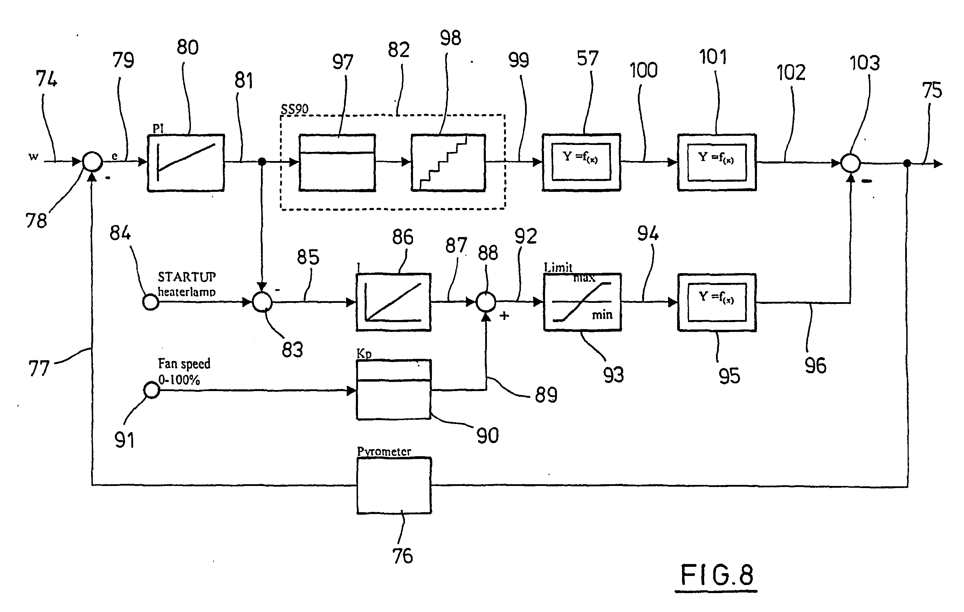

Fig. 8 zeigt ein Blockschaltbild zur Veranschaulichung einer Regelungsvariante für die Heizelemente (57) sowie die Gebläse (58, 68). Der Regelstrecke wird ein Sollwert (74) für eine Außentemperatur (75) des Vorformlings (1) zugeführt, wobei die Außentemperatur (75) die Ausgangsgröße der Regelstrecke darstellt. Die Außentemperatur (75) wird über ein Pyrometer (76) erfaßt und eine Ausgangsgröße (77) des Pyrometers (76) wird im Bereich eines Differenzbildners (78) vom Sollwert (74) abgezogen. Eine Regelabweichung (79) als Ausgangsgröße des Differenzbildners (78) wird einem Regler (80) als Eingangsgröße zugeführt. Bei der dargestellten Ausführungsform ist der Regler (80) als ein PI-Regler realisiert.

Eine Ausgangsgröße (81) des Reglers (80) wird zum einen einem Stellglied (82) und zum anderen einem Differenzbildner (83) zugeführt. Das Stellglied (82) setzt die Ausgangsgröße (81) des Reglers (80) in eine elektrische Energieversorgung für die Heizelemente (57) um. Dem Differenzbildner (83) wird zusätzlich zur Ausgangsgröße (81) ein Anfangswert (84) für die Heizelemente (57) zugeführt. Ein entsprechender Differenzwert (85) stellt die Eingangsgröße für einen Regler (86) dar, der im dargestellten Beispiel als ein I-Regler ausgebildet ist. Ein Ausgangswert (87) des Reglers (86) wird im Bereich eines Additionsgliedes (88) mit einer Ausgangsgröße (89) eines Verstärkers (90) verknüpft, dem als Eingangsgröße ein Sollwert (91) für die Förderleistung der Gebläse (58, 68) zugeführt wird.

Ein Ausgangswert (92) des Additionsgliedes (88) wird einem Begrenzer (93) zur Vorgabe einer maximalen und einer minimalen Drehzahl der Gebläse (58, 68) zugeführt, ein Ausgangswert (94) des Begrenzers (93) wirkt auf die Regelstrecke (95) ein, die die Charakteristika der Gebläse (58, 68) sowie das Temperaturverhalten der Vorformlinge (1) in Abhängigkeit von der Gebläseeinwirkung zusammenfaßt. Eine Ausgangsgröße (96) der Regelstrecke (95) stellt eine Komponente der Außentemperatur (75) der Vorformlinge (1) dar.

Das Stellglied (82) umfaßt die Reihenschaltung eines Verstärkers (97) sowie eines stufenweisen Integrators (98). Eine Ausgangsgröße (99) des Stellgliedes (2) wirkt auf die Heizelemente (57) ein und eine von den Heizelementen (57) als Ausgangsgröße erzeugte Wärmestrahlung (100) wird einer Regelstrecke (101) zugeführt. Die Regelstrecke (101) faßt die Charakteristika der Heizstrecke sowie das Verhalten der Vorformlinge (1) in Abhängigkeit von der Wärmestrahlung zusammen. Eine Ausgangsgröße (102) der Regelstrecke (101) stellt eine weitere Komponente für die Außentemperatur (75) der Vorformlinge (1) bereit.

Die Ausgangsgrößen (96, 102) werden im Bereich eines Differenzbildners (103) zusammengefaßt, wobei die von den Heizstrahlern (57) verursachte Erwärmung der Vorformlinge (1) um die von den Gebläsen (58, 68) verursachte Kühlung vermindert wird.

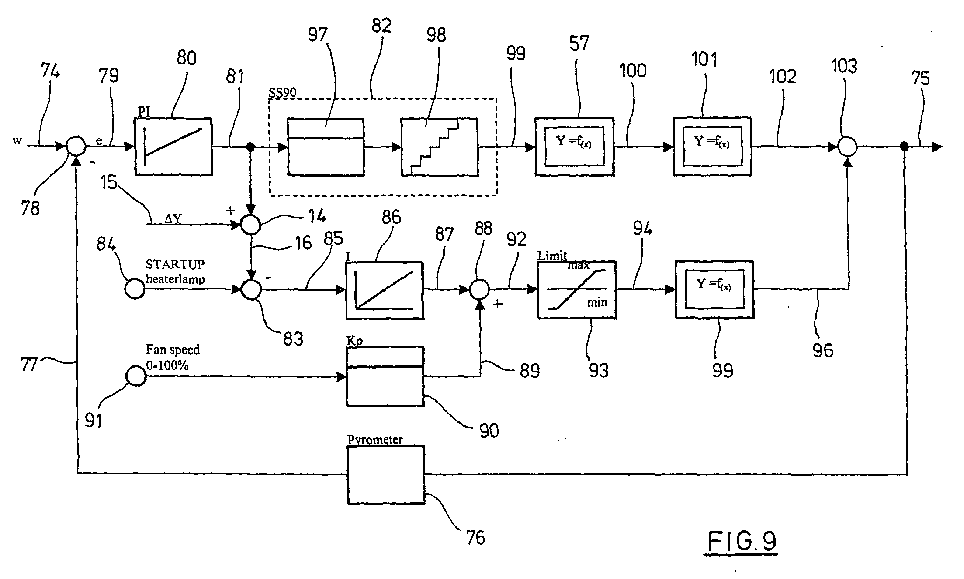

Die in Fig. 9 dargestellte Regelungsvariante umfaßt zusätzlich ein Additionsglied (14), das den Ausgangswert (81) des Reglers (80) sowie ein Differenzsignal (15) zusammenfaßt. Der Ausgangswert des Additionsgliedes (14) wird dann dem Differenzbildner (83) statt der direkten Zuführung des Ausgangswertes (81) gemäß der Ausführungsform in Fig. 8 zugeleitet.

Durch das zusätzliche Additionsglied (14) ist es möglich, das Regelungsziel gemäß Fig. 8, nämlich eine möglichst große Konstanthaltung sowohl der Ausgangsgröße (81) des Reglers (80) als auch der Außentemperatur (75) der Vorformlinge (1) zu erreichen. Gemäß der Ausführungsform in Fig. 8 wird dieses Ziel dadurch realisiert, daß zur Konstanthaltung der Oberflächentemperatur (75) eine Veränderung der Kühlleistung der Gebläse (58, 68) realisiert wird und daß hierdurch an die jeweiligen Produktionsbedingungen angepaßt eine jeweils erforderliche Kühlleistung durch die Oberflächenkühlung der Vorformlinge (1) realisiert wird.

Gemäß Fig. 9 wird das aktuelle Ausgangssignal (81) des Reglers (80) von einem Abtast-Halte-Glied überwacht. Weicht das aktuelle Ausgangssignal (81) von einem unmittelbar vorhergehenden Vergangenheitswert um ein vorgebbares Differenzsignal (15) ab, so wird der Vorgabewert für die Lüfterleistung um einen definierbaren Wert erhöht. Die hierdurch hervorgerufene verstärkte Kühlung führt dazu, daß gleichzeitig auch der Regler (80) seine Ausgangsgröße wieder anhebt und daß hierdurch die Ausgangsgröße (81) zumindest in den Bereich ihres ursprünglichen Wertes zurückkehrt.

Beim Erreichen der vorgegebenen minimalen oder maximalen Lüfterleistung, die über den Begrenzer (93) definiert ist, kann der Regelablauf solange außer Kraft gesetzt werden, bis die Lüfterleistung einen Arbeitspunkt zwischen den Grenzwerten erreicht. Während eines derartigen Betriebes erfolgt eine Temperaturregelung der Vorformlinge (1) ausschließlich über die Heizelemente (57).

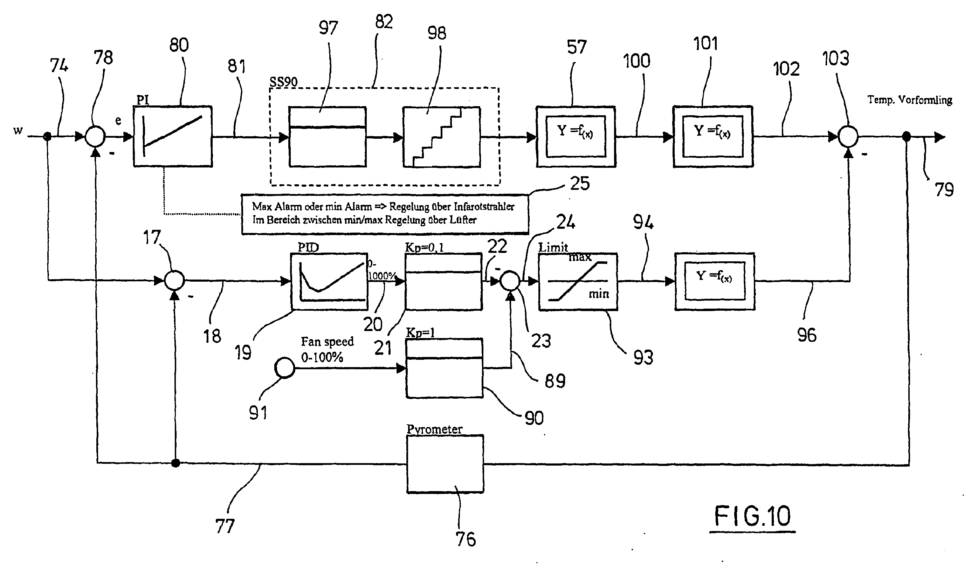

Fig. 10 zeigt eine weitere Variante zur Regelung gemäß Fig. 8. Bei dieser Ausführungsform wird zur Regelung der Außentemperatur (75) des Vorformlings (1) eine Kaskadenregelung mit zwei voneinander unabhängigen Regelkreisen realisiert. Der Sollwert (74) und die Ausgangsgröße (77) des Pyrometers (76) werden hier sowohl dem Differenzbildner (78) als auch einem Differenzbildner (17) zugeführt, dessen Ausgangsgröße (18) zu einem Regler (19) geleitet wird, der bei der dargestellten Ausführungsform als PID-Regler realisiert ist. Eine Ausgangsgröße (20) des Reglers (19) wird einem Verstärker (21) zugeführt. Eine Ausgangsgröße (22) des Verstärkers (21) und die Ausgangsgröße (89) des Verstärkers (90) werden im Bereich eines Differenzbildners (23) zusammengefaßt. Eine Ausgangsgröße (24) des Differenzbildners (23) dient bei dieser Regelungsvariante als Eingangssignal für den Begrenzer (93).

Zusätzlich ist es möglich, den Regler (80) mit einer Überwachung (25) auszustatten, die insbesondere dann ein Warnsignal abgibt, wenn die Kühlleistung der Gebläse (58, 68) ihren minimalen oder ihren maximalen Wert erreicht hat und wenn in diesem Fall die Regelung der Außentemperatur (75) der Vorformlinge (1) ausschließlich über die Heizelemente (57) erfolgt. Alternativ zur Realisierung des Reglers (19) als PID-Regler ist es auch möglich, eine Realisierung als PI-Regler oder beispielsweise als PID-T1-Regler vorzunehmen.

Mit der Regelungsvariante gemäß Fig. 10 ist es insbesondere möglich, bei negativen Regelungsabweichungen eine Kompensation über den Regler (80) vorzunehmen und bei positiven Regelungsabweichungen den Ausgleich mit Hilfe des Reglers (19) durchzuführen, zumindest solange, wie noch nicht die maximalen bzw. minimalen Werte des Begrenzers (93) erreicht sind.

## Patentansprüche

1. Verfahren zur Temperierung von Vorformlingen (1) aus einem thermoplastischen Material, die im Anschluß an ihre Temperierung innerhalb einer Blasform (34) durch Einwirkung eines unter Druck stehenden Mediums in einen Behälter (13) umgeformt werden, bei dem die Vorformlinge (1) sowohl durch Beaufschlagung mit einer Heizstrahlung erwärmt als auch durch Anblasen mit Kühlluft zumindest im Oberflächenbereich gekühlt werden, **dadurch gekennzeichnet, daß** von einer Regelung eine Kompensation einer Veränderung der Oberflächentemperatur der Vorformlinge (1) aufgrund von einwirkenden Umgebungsparametern durch eine Veränderung der Intensität der Beaufschlagung der Vorformlinge mit Kühlluft durchgeführt wird, daß bei gleichzeitig einwirkender Heizung und Kühlung von der Regelung eine im wesentlichen gleichbleibende Oberflächentemperatur der Vorformlinge (1) durch die Veränderung der Kühlung ereicht wird und daß die Oberflächentemperatur mindestens einiger der Vorformlinge (1) gemessen und von der Regelung mit einem Sollwert verglichen wird.

2. Verfahren nach Anspruch 1, **dadurch gekennzeichnet, daß** die Intensität der Heizstrahlung zur Anpassung an mindestens einen Betriebsparameter geregelt wird.

3. Verfahren nach Anspruch 1 oder 2, **dadurch gekennzeichnet, daß** eine Veränderung der Kühlleistung bei Überschreiten einer vorgebbaren Abweichung der Oberflächentemperatur von einem Sollwert durchgeführt wird.

4. Verfahren nach einem der Ansprüche 1 bis 3, **dadurch gekennzeichnet, daß** die Oberflächentemperatur der Vorformlinge (1) von einem Pyrometer (76) gemessen wird.

5. Verfahren nach einem der Ansprüche 1 bis 4, **dadurch gekennzeichnet, daß** die Innentemperatur mindestens einiger der Vorformlinge (1) gemessen wird.

6. Verfahren nach Anspruch 5, **dadurch gekennzeichnet, daß** die Innentemperatur mindestens einiger der Vorformlinge von einem Pyrometer gemessen wird.

7. Verfahren nach Anspruch 5, **dadurch gekennzeichnet, daß** das Pyrometer zur Durchführung der Messung mindestens bereichsweise in einen Innenraum des Vorformlings (1) eingefahren wird.

8. Verfahren nach einem der Ansprüche 1 bis 7, **dadurch gekennzeichnet, daß** die Vorformlinge (1) an räumlich ortsfesten Heizelementen (57) vorbeitransportiert werden.

9. Verfahren nach einem der Ansprüche 1 bis 8, **dadurch gekennzeichnet, daß** das Einfahren und Ausfahren eines Pyrometers in den Innenraum des Vorformlings (1) mechanisch von der Transportbewegung der Vorformlinge abgeleitet wird.

10. Verfahren nach einem der Ansprüche 1 bis 9, **dadurch gekennzeichnet, daß** eine Innentemperatur der Vorformlinge (1) über die Heizelemente (57) und eine Außentemperatur der Vorformlinge (1) über die Gebläse (58, 68) geregelt wird.

11. Verfahren nach einem der Ansprüche 1 bis 10, **dadurch gekennzeichnet, daß** eine Temperaturträgheit des Materials der Vorformlinge (1) durch ein in die Regelung implementiertes mathematisches Model der Regelungsstrecke kompensiert wird.

12. Verfahren nach einem der Ansprüche 1 bis 11, **dadurch gekennzeichnet, daß** mindestens einer der verwendeten Regler mit einem Integral-Anteil versehen wird.

13. Verfahren nach einem der Ansprüche 1 bis 12, **dadurch gekennzeichnet, daß** die Vorformlinge (1) von Infrarot-Strahlung beheizt werden.

14. Verfahren nach einem der Ansprüche 1 bis 13, **dadurch gekennzeichnet, daß** die Vorformlinge (1) von der Heizung mit einem Temperaturprofil in ihrer Längsrichtung versehen werden.

15. Verfahren nach einem der Ansprüche 1 bis 13, **dadurch gekennzeichnet, daß** die Vorformlinge (1) von der Heizung mit einem Temperaturprofil in ihrer Umfangsrichtung versehen werden.

16. Verfahren nach einem der Ansprüche 1 bis 15, **dadurch gekennzeichnet, daß** bei einer Veränderung der Heizstrahlung unter Berücksichtigung der Temperatureigenschaften der Vorformlinge (1) gleichzeitig eine Veränderung der Kühlleistung vor einem Auftreten einer Regelungsabweichung durchgeführt wird.

17. Verfahren nach einem der Ansprüche 1 bis 16, **dadurch gekennzeichnet, daß** die Kühlleistung durch eine Regelung der Drehzahl der eingesetzten Kühlgebläse verändert wird.

18. Verfahren nach einem der Ansprüche 1 bis 17, **dadurch gekennzeichnet, daß** die Lüfterleistung auf minimale und maximale Werte begrenzt wird.

19. Verfahren nach einem der Ansprüche 1 bis 18, **dadurch gekennzeichnet, daß** eine Kaskadenregelung realisiert wird.

20. Vorrichtung zur Temperierung von Vorformlingen (1) aus einem thermoplastischen Material, die mit mindestens einem Heizelement (57) und mit mindestens einem Kühlluftgebläse (58, 68) versehen ist sowie die im Bereich eines Transportweges der Vorformlinge (1) angeordnet ist, der eine Vorformlingseingabe (54) mit einer Blasstation (33) verbindet, **dadurch gekennzeichnet, daß** das Kühlluftgebläse (58, 68) an eine Regelung angeschlossen ist, die ein Meßsignal mindestens eines Temperatursensors auswertet, der eine Temperatur der Vorformlinge (1) erfaßt und daß die Regelung für die Vorgabe eines Sollwertes für eine Förderleistung des Kühlluftgebläses (58, 68) eine Charakteristik zur näherungsweisen Konstanthaltung einer Oberflächentemperatur des Vorformlings (1) in Abhängigkeit von einem vorgegebenen Sollwert aufweist.

21. Vorrichtung nach Anspruch 20, **dadurch gekennzeichnet, daß** das Heizelement (57) an die Regelung angeschlossen ist.

22. Vorrichtung nach Anspruch 20 oder 21, **dadurch gekennzeichnet, daß** die Regelung als Teil eines geschlossenen Regelkreises realisiert ist.

23. Vorrichtung nach einem der Ansprüche 20 bis 22, **dadurch gekennzeichnet, daß** der Regelkreis mindestens einen Regler (80, 86) mit einem Integral-Anteil aufweist.

24. Vorrichtung nach einem der Ansprüche 20 bis 23, **dadurch gekennzeichnet, daß** der Regelkreis eine Aufschaltung für Startwerte zur Durchführung eines Hochlaufvorganges aufweist.

25. Vorrichtung nach einem der Ansprüche 20 bis 24, **dadurch gekennzeichnet, daß** die Regelung als Kaskadenregelung ausgebildet ist.

26. Vorrichtung nach einem der Ansprüche 20 bis 25, **dadurch gekennzeichnet, daß** das Heizelement (57) und das Kühlluftgebläse (58, 68) an eine gemeinsame Regelung angeschlossen sind.

## Claims

1. Method of heating preforms (1) made from a thermoplastic material, which, after being heated, are formed inside a blow mould (34) due to the action of a medium placed under pressure in a container (13), whereby the preforms (1) are both heated by applying heat radiation and cooled by blasting at least the surface region with cool air, **characterised in that** a control system compensates for a change in the surface temperature of the preforms (1) induced by ambient parameters acting on it by varying the intensity of cool air applied to the preforms, and due to the simultaneous heating and cooling, the control system obtains an essentially constant surface temperature of the preforms (1) by varying the cooling, and the surface temperature of at least some of the preforms (1) is measured and compared with a desired value by the control system.

2. Method as claimed in claim 1, **characterised in that** the intensity of the heat radiation is regulated in order to adapt to at least one operating parameter.

3. Method as claimed in claim 1 or 2, **characterised in that** the cooling power is varied if the surface temperature exceeds a pre-settable variance from a desired value.

4. Method as claimed in one of claims 1 to 3, **characterised in that** the surface temperature of the preforms (1) is measured by a pyrometer (76).

5. Method as claimed in one of claims 1 to 4, **characterised in that** the internal temperature of at least some of the preforms (1) is measured.

6. Method as claimed in claim 5, **characterised in that** the internal temperature of at least some of the preforms is measured by a pyrometer.

7. Method as claimed in claim 5, **characterised in that** the pyrometer is introduced into at least certain regions of an interior of the preform (1) in order to take the measurement.

8. Method as claimed in one of claims 1 to 7, **characterised in that** the preforms (1) are conveyed past heating elements (57) which are stationary in three dimensions.

9. Method as claimed in one of claims 1 to 8, **characterised in that** a pyrometer is introduced into and extracted from the interior of the preform (1), timed mechanically on the basis of the conveying movement of the preforms.

10. Method as claimed in one of claims 1 to 9, **characterised in that** an internal temperature of the preforms (1) is controlled by means of the heating elements (57) and an external temperature of the preforms (1) is controlled by means of the fans (58, 68).

11. Method as claimed in one of claims 1 to 10, **characterised in that** a temperature inertia of the material of the preforms (1) is compensated by means of a mathematical model of the control run implemented in the control system.

12. Method as claimed in one of claims 1 to 11, **characterised in that** at least one of the controllers used is provided with an integral-action component.

13. Method as claimed in one of claims 1 to 12, **characterised in that** the preforms (1) are heated by infrared radiation.

14. Method as claimed in one of claims 1 to 13, **characterised in that** the heating imparts a temperature profile to the preforms (1) in their longitudinal direction.

15. Method as claimed in one of claims 1 to 13, **characterised in that** heating imparts a temperature profile to the preforms (1) in their circumferential direction.

16. Method as claimed in one of claims 1 to 15, **characterised in that** when the heat radiation is changed to take account of the temperature properties of the preforms (1), the cooling power is varied simultaneously before a control variance occurs.

17. Method as claimed in one of claims 1 to 16, **characterised in that** the cooling power is varied by controlling the speed of the cooling fans used.

18. Method as claimed in one of claims 1 to 17, **characterised in that** the fan power is limited to minimum and maximum values.

19. Method as claimed in one of claims 1 to 18, **characterised in that** a cascade control is implemented.

20. Device for heating preforms (1) made from a thermoplastic material, which is provided with at least one heating element (57) and at least one cooling fan (58, 68) disposed in the region of a conveyor run of the preforms (1) which connects a preform input (54) to a blowing station (33), **characterised in that** the cooling fan (58, 68) is connected to a control system which evaluates a measurement signal of at least one temperature sensor which detects a temperature of the preforms (1), and in order to pre-set a desired value for a conveying power of the cooling fan (58, 68), the control system has a characteristic for maintaining a surface temperature of the preform (1) more or less constant depending on a pre-set desired value.

21. Device as claimed in claim 20, **characterised in that** the heating element (57) is connected to the control system.

22. Device as claimed in claim 20 or 21, **characterised in that** the control system is configured as part of a closed-loop control.

23. Device as claimed in one of claims 20 to 22, **characterised in that** the closed-loop control has at least one controller (80, 86) with an integral-action component.

24. Device as claimed in one of claims 20 to 23, **characterised in that** the closed-loop control has a start-up circuit for start-up values in order to implement a running-up operation.

25. Device as claimed in one of claims 20 to 24, **characterised in that** the control system is configured as a cascade control.

26. Device as claimed in one of claims 20 to 25, **characterised in that** the heating element (57) and the cooling fan (58, 68) are connected to a common control system.

## Revendications

1. Procédé pour l'équilibrage de la température de préformes (1) en matière thermoplastique, qui sont façonnées en un conteneur (13), après l'équilibrage de leur température à l'intérieur d'un moule de soufflage (34), sous l'action d'un agent sous pression, procédé dans lequel les préformes (1) sont chauffées sous l'effet d'un rayonnement thermique, ainsi que refroidies, au moins superficiellement, par soufflage d'air de refroidissement, **caractérisé en ce que**, par l'unité de réglage, une compensation d'une modification de la température superficielle des préformes (1) sous l'effet de paramètres ambiants est effectuée par modification de l'intensité de l'air de refroidissement auquel sont soumis les préformes, **en ce que**, sous l'action simultanée du chauffage et du refroidissement par l'unité de réglage, une température superficielle des préformes sensiblement constante est obtenue, par la modification du refroidissement, et **en ce que** la température superficielle d'au moins quelques-unes des préformes (1) est mesurée et est comparée par l'unité de réglage à une valeur de consigne.

2. Procédé selon la revendication 1, **caractérisé en ce que** l'intensité du rayonnement thermique est réglée pour l'adaptation à au moins un paramètre de fonctionnement.

3. Procédé selon revendication 1 ou 2, **caractérisé en ce qu'**une modification de la puissance de refroidissement est effectuée au moyen d'une valeur de consigne, lorsqu'une divergence prédéterminée de la température superficielle est dépassée.

4. Procédé selon l'une des revendications 1 à 3, **caractérisé en ce que** la température superficielle des préformes (1) est mesurée par un pyromètre (76).

5. Procédé selon l'une des revendications 1 à 4, **caractérisé en ce que** la température intérieure d'au moins quelques-unes des préformes (1) est mesurée.

6. Procédé selon la revendication 5, **caractérisé en ce que** la température interne d'au moins quelques-unes des préformes est mesurée par un pyromètre.

7. Procédé selon la revendication 5, **caractérisé en ce que** le pyromètre est introduit, au moins par sections, dans un espace intérieur de la préforme (1) lors de la réalisation de la mesure.

8. Procédé selon l'une des revendications 1 à 7, **caractérisé en ce que** les préformes (1) sont transportées en passant devant des éléments de chauffages (57) stationnaires.

9. Procédé selon l'une des revendications 1 à 8, **caractérisé en ce que** l'introduction et le retrait d'un pyromètre à l'intérieur / hors de la préforme (1) sont mécaniquement dérivées du mouvement de transport des préformes.

10. Procédé selon l'une des revendications 1 à 9, **caractérisé en ce qu'**une température intérieure de la préforme (1) est réglée par l'intermédiaire des éléments de chauffage (57) et qu'une température extérieure des préformes (1) est réglée par l'intermédiaire de la soufflante (58, 68).

11. Procédé selon l'une des revendications 1 à 10, **caractérisé en ce qu'**une inertie thermique du matériau des préformes (1) est compensée par un modèle mathématique du système commandé, implanté dans l'unité de réglage.

12. Procédé selon l'une des revendications 1 à 11, **caractérisé en ce qu'**au moins l'un des régleurs utilisés est pourvu d'une composante intégrale.

13. Procédé selon l'une des revendications 1 à 12, **caractérisé en ce que** les préformes (1) sont chauffées par un rayonnement infrarouge.

14. Procédé selon l'une des revendications 1 à 13, **caractérisé en ce que** les préformes (1) reçoivent par chauffage un profil de température dans leur direction longitudinale.

15. Procédé selon l'une des revendications 1 à 13, **caractérisé en ce que** les préformes (1) reçoivent par chauffage un profil de température dans leur direction périphérique.

16. Procédé selon l'une des revendications 1 à 15, **caractérisé en ce que**, lors d'une modification du rayonnement thermique, compte tenu des propriétés thermiques des préformes (1), une modification de la puissance de refroidissement a lieu simultanément, avant l'apparition d'une divergence de réglage.

17. Procédé selon l'une des revendications 1 à 16, **caractérisé en ce que** la puissance frigorifique est limitée par des valeurs minimales et maximales.

18. Procédé selon l'une des revendications 1 à 17, **caractérisé en ce que** la puissance de ventilation est limitée par des valeurs minimales et maximales.

19. Procédé selon l'une des revendications 1 à 18, **caractérisé en ce qu'**un réglage en cascade est réalisé.

20. Dispositif pour l'équilibrage de la température de préformes (1) en matière thermoplastique, qui est équipé d'au moins un élément de chauffage (57) et d'au moins une soufflante d'air de refroidissement (58, 68), et qui est agencé dans la région d'une voie de transport des préformes (1) qui est reliée à un poste de soufflage (33), **caractérisé en ce que** la soufflante d'air de refroidissement (58, 68) est raccordé à un système de réglage qui évalue un signal de mesure d'au moins un capteur qui capte la température des préformes (1), et **en ce que** l'unité de réglage, pour la détermination d'une valeur de consigne en ce qui concerne le débit de la soufflante d'air de refroidissement (58, 68), présente une caractéristique pour le maintien constant, approximatif d'une température superficielle de la préforme (1) en fonction d'une valeur de consigne prédéterminée.

21. Dispositif selon la revendication 20, **caractérisé en ce que** l'élément de chauffage (57) est raccordé à l'unité de réglage.

22. Dispositif selon revendication 20 ou 21, **caractérisé en ce que** l'unité de réglage est réalisé en tant que partie d'un circuit de régulation fermé.

23. Dispositif selon l'une des revendications 20 à 22, **caractérisé en ce que** le circuit de réglage présente au moins un régleur (80, 86) avec une composante intégrale.

24. Dispositif selon l'une des revendications 20 à 23, **caractérisé en ce que** le circuit de réglage présente une entrée pour des valeurs de démarrage aux fins de réalisation d'une montée en régime rapide.

25. Dispositif selon l'une des revendications 20 à 24, **caractérisé en ce que** l'unité de réglage est conçue en tant que réglage en cascade.

26. Dispositif selon l'une des revendications 20 à 25, **caractérisé en ce que** l'élément de chauffage (57) et la soufflante d'air de refroidissement (58, 68) sont raccordés à une unité de réglage commune.
